# EUROPÄISCHE PATENTSCHRIFT

(11) **EP 3 580 583 B1**
(45) Veröffentlichungstag und Bekanntmachung des Hinweises auf die Patenterteilung: **08.12.2021**
(21) Anmeldenummer: 18700725.7
(22) Anmeldetag: 11.01.2018
(51) Int. Cl.: G01S 15/931, G01S 7/521, G01S 7/527, G01S 7/52, G01S 13/931

(54) **VERFAHREN ZUM BETRIEB EINES VERDECKT EINGEBAUTEN ULTRASCHALLSENSORS EINES FAHRZEUGS**
METHOD FOR OPERATING AN ULTRASONIC SENSOR, INSTALLED IN A COVERED MANNER, OF A VEHICLE
PROCÉDÉ POUR FAIRE FONCTIONNER UN CAPTEUR À ULTRASONS MONTÉ DE FAÇON CACHÉE D'UN VÉHICULE

(30) Priorität: 08.02.2017 DE 102017201978
(43) Veröffentlichungstag der Anmeldung: 18.12.2019
(73) Patentinhaber: Robert Bosch GmbH, 70442 Stuttgart (DE)
(72) Erfinder: WEIDENFELDER, David, 71229 Leonberg (DE); SCHUMANN, Michael, 70597 Stuttgart (DE)
(86) Internationale Anmeldenummer: PCT/EP2018/050634
(87) Internationale Veröffentlichungsnummer: WO 2018/145848

(56) Entgegenhaltungen:
- WO-A1-2005/083464
- DE-A1-102005 061 396
- DE-A1-102008 054 047
- DE-A1-102011 016 287
- DE-B3-102015 211 467

## Beschreibung

### Stand der Technik

Die Erfindung betrifft ein Verfahren zum Betrieb eines Ultraschallsensors eines Fahrzeugs, wobei der Ultraschallsensor verdeckt eingebaut ist, so dass eine Membran des Ultraschallsensors mit einem Fahrzeugteil verbunden ist, wobei die momentanen Eigenschaften des Fahrzeugteils eine Richtcharakteristik des Ultraschallsensors beeinflussen. Weitere Aspekte der Erfindung umfassen ein Fahrassistenzsystem, welches mindestens einen verdeckt eingebauten Ultraschallsensor umfasst, sowie ein Computerprogrammprodukt, welches zur Ausführung des Verfahrens eingerichtet ist.

Moderne Fahrzeuge sind mit einer Vielzahl von Fahrassistenzsystemen ausgestattet, die mit Hilfe von Daten über die Umgebung des Fahrzeugs den Fahrer bei der Durchführung verschiedener Fahrmanöver unterstützen. Zur Erfüllung ihrer Aufgaben benötigen derartige Fahrassistenzsysteme ein möglichst genaues Abbild der Umgebung des Fahrzeugs. Das Abbild der Umgebung des Fahrzeugs wird mit verschiedenen Sensoren erzeugt, beispielsweise mit Hilfe von Ultraschallsensoren. Durch die Ultraschallsensoren wird dabei ein Signal ausgesendet, dessen Echo bei Reflexion an einem Hindernis wieder von den Ultraschallsensoren, d.h. demselben oder einem anderen als dem aussendenden, am Fahrzeug registriert wird. Aus der Zeit, die zwischen Aussenden und Empfangen des Signals vergangen ist, und der bekannten Ausbreitungsgeschwindigkeit des Signals kann der Abstand zwischen dem Fahrzeug und dem reflektierenden Hindernis berechnet werden. Derartige Ultraschallsensoren verfügen über ein Sichtfeld, innerhalb dem diese Hindernisse wahrnehmen können. Dabei nimmt die Empfindlichkeit der Ultraschallsensoren zum Rand ihres Sichtfeldes hin ab. Zum Ausblenden von Störsignalen, welche beispielsweise durch Unebenheiten des Untergrunds entstehen, so dass der Boden das ausgesandte Signal teilweise reflektiert, ist ein Schwellenwert vorgesehen. Es wird nur dann auf ein Hindernis geschlossen, wenn die Signalstärke des empfangenen Echosignals größer ist als der Schwellenwert.

Aus ästhetischen Gründen ist es bevorzugt, die Ultraschallsensoren verdeckt am Fahrzeug anzuordnen. Dazu werden diese beispielsweise hinter einen Stoßfänger oder einem anderen Fahrzeugteil montiert, so dass diese nicht sichtbar sind. Hierbei ist zu beachten, dass die Eigenschaften des Fahrzeugteils die Eigenschaften des Ultraschallsensors, insbesondere auch dessen Sichtfeld, beeinflussen.

Aus dem Dokument DE 10 2015 211 467 B3 ist ein Verfahren und eine Vorrichtung zur Einstellung der Empfindlichkeit eines Ultraschallsensors bekannt. Zur Ausblendung einer Störung ist ein Störschwellenwert vorgesehen, der während des Betriebs des Ultraschallsensors ermittelt wird. Um zu vermeiden, dass aufgrund einer starken Störung der Schwellenwert so unempfindlich eingestellt wird, dass ein Field of View (Sichtbereich) signifikant verändert wird, ist ein maximaler Schwellenwert vorgesehen. Ist der ermittelte Störschwellenwert größer als der maximale Schwellenwert, so wird der maximale Schwellenwert verwendet. Ist der ermittelte Störschwellenwert kleiner als der maximale Schwellenwert, so wird der ermittelte Störschwellenwert verwendet. Der maximale Schwellenwert wird so bestimmt, dass ein Referenzobjekt durchgehend im Detektionsbereich ermittelt werden kann.

Aus DE 10 2004 037 723 A1 ist ein Ultraschallsensor mit einstellbarem Erfassungsbereich bekannt. Der Erfassungsbereich wird durch eine Veränderung einer Schaltpunktkurve des Ultraschallsensors durch eine Beeinflussung der Schwellenwertkurven vorgenommen. Zusätzlich ist es möglich, die Schwellenwerte in Abhängigkeit von Umgebungsbedingungen wie der Temperatur selbsttätig einzustellen.

Bei einem verdeckt eingebauten Ultraschallsensor wird eine Membran eines Ultraschallgebers mit einem Fahrzeugteil derart verbunden, dass das Fahrzeugteil sowie die Membran gemeinsam ein schwingfähiges System ausbilden, welches die Ultraschallsignale abstrahlt und reflektierte Echos wieder empfängt. Die Eigenschaften dieses schwingfähigen Systems werden demnach nicht nur durch den Ultraschallsensor bzw. dessen Membran vorgegeben, sondern sind auch von den Materialeigenschaften des Fahrzeugteils abhängig. Es ist daher wünschenswert, beim Betrieb eines Ultraschallsensors die momentanen Materialeigenschaften dieses Fahrzeugteils mit zu berücksichtigen.

### Offenbarung der Erfindung

Es wird ein Verfahren zum Betrieb eines Ultraschallsensors eines Fahrzeugs vorgeschlagen, wobei der Ultraschallsensor verdeckt eingebaut ist, so dass eine Membran des Ultraschallsensors mit einem Fahrzeugteil verbunden ist, wobei die momentanen Eigenschaften des Fahrzeugteils eine Richtcharakteristik des Ultraschallsensors beeinflussen. Während des Betriebs des Ultraschallsensors werden Puls-Echo-Messungen unter Verwendung des Ultraschallsensors ausgeführt, wobei bei den Puls-Echo-Messungen ein Schwellenwert zum Ausblenden von Störsignalen verwendet wird. Dabei ist vorgesehen, dass eine Anpassung des Schwellenwerts an die durch die momentanen Eigenschaften des Fahrzeugteils vorgegebene Richtcharakteristik des Ultraschallsensors erfolgt.

In einer ersten Variante a) erfolgt das Anpassen des Schwellenwerts an die momentane Richtcharakteristik durch Ermitteln einer Temperatur und Bestimmen des Schwellenwerts unter Verwendung einer vorab ermittelten Beziehung zwischen der Temperatur und der Richtcharakteristik.

In einer zweiten Variante b) erfolgt das Anpassen des Schwellenwerts an die momentane Richtcharakteristik durch Bestimmen einer Resonanzfrequenz eines aus der Membran und dem Fahrzeugteil gebildeten schwingfähigen Systems und Bestimmen des Schwellenwerts unter Verwendung einer vorab ermittelten Beziehung zwischen der Resonanzfrequenz und der Richtcharakteristik.

Für einen verdeckten Einbau des Ultraschallsensors wird dieser bevorzugt an einer Innenseite einer Außenwand eines Fahrzeugteils angeordnet. Dabei wird üblicherweise die Membran des Ultraschallsensors mit der Außenwand dieses Fahrzeugteils verbunden. Bei dem Fahrzeugteil kann es sich beispielsweise um einen Stoßfänger handeln. Das Verbinden kann beispielsweise durch Kleben erfolgen.

Während des Betriebs des Ultraschallsensors werden Puls-Echo-Messungen ausgeführt, wobei mit Hilfe des Ultraschallsensors Ultraschallsignale ausgesendet werden und Echos von Objekten in der Umgebung wieder empfangen werden. Zum Unterscheiden zwischen einem Echo eines Objekts und einem Störsignal wird ein Schwellenwert eingesetzt. Ist eine Signalstärke eines empfangenen Echo-Signals größer als der Schwellenwert, so wird das empfangene Echo-Signal als ein Echo eines Objekts in der Umgebung interpretiert. Ist die Signalamplitude kleiner als der Schwellenwert, so wird das empfangene Echo-Signal als ein Störsignal aufgefasst und ausgeblendet.

Die verwendeten Ultraschallsensoren weisen einen Sichtbereich auf, innerhalb dem diese Objekte detektieren können. Dabei nimmt die Empfindlichkeit des Ultraschallsensors zum Rand des Sichtbereichs hin ab. Der Sichtbereich ist von der Richtcharakteristik des Ultraschallsensors abhängig. Die Richtcharakteristik beschreibt die Richtungsabhängigkeit der Schallabstrahlung und kann über einen vertikalen oder horizontalen Öffnungswinkel charakterisiert werden. Der Öffnungswinkel wird dabei üblicherweise durch einen Abfall der Amplitude des ausgesandten Ultraschallsignals auf einen vorgegebenen Wert definiert. Diese Amplitude ist wiederum abhängig von der Frequenz des verwendeten Ultraschallsignals, Eigenschaften des Schallwandlers, den Materialeigenschaften des Fahrzeugteils, mit dem die Membran des Ultraschallsensors verbunden ist, sowie den Eigenschaften der Verbindung zwischen der Membran und dem Fahrzeugteil. Diese Materialeigenschaften können sich abhängig von den momentanen Umgebungsbedingungen, insbesondere abhängig von der momentanen Temperatur, verändern. Insbesondere bei Kunststoffen, die typischerweise als Material für Fahrzeugteile wie Stoßfänger verwendet werden, findet eine Veränderung von Materialparametern mit der Temperatur statt. Auch können sich beispielsweise die Eigenschaften einer Verbindung zwischen dem Ultraschallsensor und dem Fahrzeugteil, z.B. die Materialeigenschaften einer Klebeverbindung, mit der Temperatur verändern. Diese Veränderungen der Materialparameter bewirken insbesondere eine Verschiebung der Resonanzfrequenz des aus Fahrzeugteil und Membran gebildeten schwingfähigen Systems. Hierbei ist das gegebenenfalls zur Verbindung zwischen dem Ultraschallsensor und dem Fahrzeugteil eingesetzte Material, wie beispielsweise ein Klebstoff, ebenfalls Teil des schwingfähigen Systems. Der Öffnungswinkel, der ein Maß für die Richtcharakteristik ist, hängt dabei insbesondere von der Resonanzfrequenz des schwingfähigen Systems ab, da der Öffnungswinkel von dem Quotienten aus der Wellenlänge und dem Membrandurchmesser abhängig ist. Bei einer Temperaturänderung bleibt der Membrandurchmesser näherungsweise konstant, so dass bei einer Temperaturänderung die Richtcharakteristik im Wesentlichen durch eine Veränderung der Resonanzfrequenz bestimmt wird. Bei abnehmender Temperatur verschiebt sich die Resonanzfrequenz zu höheren Frequenzen, was zu einer Verringerung des horizontalen und vertikalen Öffnungswinkels führt. Bei Erhöhung der Temperatur nimmt die Resonanzfrequenz ab und es kommt zu einer Vergrößerung des horizontalen und vertikalen Öffnungswinkels.

Bei einer Vergrößerung des Öffnungswinkels, insbesondere des vertikalen Öffnungswinkels, ändert sich die Richtcharakteristik des Ultraschallsensors dahingehend, dass das ausgesandte Ultraschallsignal eines an einem Fahrzeug angeordneten Ultraschallsensors früher, d. h. in einem geringeren Abstand zum Fahrzeug, und mit einer größeren Intensität auf den Boden trifft. Somit ist zu erwarten, dass auch die Intensität von durch Reflexionen am Boden verursachter Störsignale zunimmt. In Zusammenhang mit verdeckt eingebauten Ultraschallsensoren war es daher im Stand der Technik üblich, den Schwellenwert zum Ausblenden von Störsignalen derart zu wählen, dass auch bei der höchsten erwarteten Temperatur Störsignale zuverlässig ausgeblendet werden. Dies hat jedoch zur Folge, dass bei niedrigen Temperaturen, die zu einer Verringerung der horizontalen und vertikalen Öffnungswinkel und damit zu einer Verringerung der Richtcharakteristik führen, der Sichtbereich des Ultraschallsensors bei niedrigen Umgebungstemperaturen kleiner ist als bei hohen Umgebungstemperaturen. Es ist daher bevorzugt gemäß den vorgeschlagenen Varianten des Verfahrens den Schwellenwert abzusenken, wenn sich aufgrund einer Veränderung der Umgebungsbedingungen die Richtcharakteristik dahingehend ändert, dass der horizontale und/oder der vertikale Öffnungswinkel verringert wird und umgekehrt den Schwellenwert anzuheben, wenn durch eine Änderung der Umgebungsbedingungen die Richtcharakteristik dahingehend verändert wird, dass der vertikale und/oder der horizontale Öffnungswinkel des Ultraschallsensors vergrößert wird.

Bevorzugt handelt es sich bei der Temperatur der Variante a) um eine über ein Thermometer des Fahrzeugs ermittelte Außentemperatur. Hierbei ist vorteilhaft, dass Fahrzeuge in der Regel über ein Thermometer zur Bestimmung der Außentemperatur verfügen, so dass kein weiterer Sensor angeordnet werden muss. Alternativ kann ein zusätzlicher Temperatursensor an dem Fahrzeugteil angeordnet werden oder in den Ultraschallsensor integriert werden, so dass die Temperatur der Variante a) eine über diesen Temperatursensor ermittelte Temperatur des Fahrzeugteils ist. Bei dieser Alternative ist zwar das Anordnen eines weiteren Sensors erforderlich, jedoch ist die direkte Bestimmung der Temperatur des Fahrzeugteils präziser als eine Messung der Außentemperatur.

Bevorzugt werden die Beziehung zwischen der Temperatur und der Richtcharakteristik und/oder die Beziehung zwischen der Resonanzfrequenz und der Richtcharakteristik durch Messungen vorab ermittelt. Hierzu kann beispielsweise der verdeckt an dem Fahrzeugteil angebaute Ultraschallsensor in einer Klimakammer angeordnet werden, wobei für verschiedene Temperaturen die die Richtcharakteristik definierenden Öffnungswinkel, insbesondere der horizontale und der vertikale Öffnungswinkel, bestimmt werden. Im Falle der Ermittlung einer Beziehung zwischen Temperatur und der Richtcharakteristik ist es dabei nicht erforderlich, für jede der eingestellten Temperaturen die Resonanzfrequenz des Ultraschallsensors zu bestimmen. Für eine Bestimmung der Beziehung zwischen der Resonanzfrequenz und der Richtcharakteristik wird die Resonanzfrequenz des schwingfähigen Systems variiert, z.B. durch Einstellen verschiedener Temperaturen und es werden für verschiedene, z.B. mittels Veränderung der Temperatur eingestellte Resonanzfrequenzen, die die Richtcharakteristik definierenden Öffnungswinkel, insbesondere ein horizontaler und ein vertikaler Öffnungswinkel, bestimmt.

In einer Ausführungsvariante des Verfahrens wird anhand der durchgeführten Messungen eine Wertetabelle bestimmt, die für eine vorgegebene Temperatur bzw. eine Resonanzfrequenz die ermittelten horizontalen und/oder vertikalen Öffnungswinkel enthält. Alternativ oder zusätzlich ist es möglich, eine Wertetabelle zu bestimmen, die zu einer Temperatur oder zu einer Resonanzfrequenz einen optimalen vorgegebenen Schwellenwert enthält. Im letzteren Fall können während des Betriebs des Ultraschallsensors aufwendige Berechnungen zur Bestimmung des optimalen Schwellenwertes entfallen, der jeweils optimale Schwellenwert kann direkt anhand der bestimmten Temperatur bzw. der bestimmten Resonanzfrequenz aus der Wertetabelle abgelesen werden.

Die vorab bestimmte Wertetabelle wird bevorzugt in einem Speicher eines Steuergeräts abgelegt, so dass diese während des Betriebs des Ultraschallsensors zur Verfügung steht.

Alternativ oder zusätzlich kann, beispielsweise mittels eines Kurvenanpassungsverfahrens, eine Näherungsformel bestimmt werden, die die Abhängigkeit der Richtcharakteristik bzw. des diese definierenden horizontalen und/oder vertikalen Öffnungswinkels von der Temperatur bzw. von der Resonanzfrequenz beschreibt. Alternativ oder zusätzlich kann beispielsweise über ein Kurvenanpassungsverfahren eine Näherungsformel bestimmt werden, mit der sich abhängig von einer Temperatur bzw. einer Resonanzfrequenz der optimale Schwellenwert bestimmen lässt. Diese vorab ermittelten Näherungsformeln können beispielsweise in einem Speicher eines Steuergeräts abgelegt werden, so dass diese bei der Ausführung des Verfahrens zur Verfügung stehen.

Bevorzugt wird für das Bestimmen der Resonanzfrequenz gemäß der Variante b) des Verfahrens eine Messung der Impedanz des Ultraschallsensors ausgeführt. Zur Durchführung der Impedanzmessung wird der Schallwandler des Ultraschallsensors bevorzugt mit elektrischen Signalen verschiedener Frequenz angeregt, wobei jeweils der elektrische Widerstand gemessen wird. Im Bereich der Resonanzfrequenz sinkt der elektrische Widerstand des Schallwandlers ab, so dass auf die Resonanzfrequenz geschlossen werden kann.

Als weitere Variante c) wird ein Verfahren zum Betrieb eines Ultraschallsensors eines Fahrzeugs vorgeschlagen, wobei der Ultraschallsensor verdeckt eingebaut ist, so dass eine Membran des Ultraschallsensors mit einem Fahrzeugteil verbunden ist, wobei die momentanen Eigenschaften des Fahrzeugteils eine Richtcharakteristik des Ultraschallsensors beeinflussen. Während des Betriebs des Ultraschallsensors werden Puls-Echo-Messungen unter Verwendung des Ultraschallsensors ausgeführt, wobei bei den Puls-Echo-Messungen ein Schwellenwert zum Ausblenden von Störsignalen verwendet wird. Dabei ist vorgesehen, dass eine Anpassung des Schwellenwerts des Ultraschallsensors erfolgt durch Regeln des Schwellenwerts unter Verwendung von bei den Puls-Echo-Messungen empfangenen Störsignalen.

Gemäß der Regelung nach Variante c) des Verfahrens wird der Schwellenwert so geregelt, dass eine konstante vorgegebene Falschalarmrate eingehalten wird. Ein Falschalarm ist dabei ein Störsignal, welches eine Amplitude aufweist, die über dem Schwellenwert liegt und somit fälschlicherweise als ein Echosignal eines Objekts angesehen wird. Steigt die Falschalarmrate an, so wird der Schwellenwert angehoben und umgekehrt wird der Schwellenwert abgesenkt, wenn die Falschalarmrate sinkt. Bei dieser Ausführungsvariante wird vorteilhafterweise für das Regeln des Schwellenwerts die gesamte Signalkette berücksichtigt, so dass neben einer aufgrund von geänderten Umgebungsbedingungen veränderten Richtcharakteristik auch weitere Faktoren wie beispielsweise eine Alterung des Materials, berücksichtigt wird.

Die auszublendenden Störsignale beinhalten insbesondere Signale von Bodenreflektionen, wobei einer Verbreiterung der Richtcharakteristik, durch die insbesondere der horizontale und/oder der vertikale Öffnungswinkel vergrößert wird, die Anzahl der von Bodenreflektionen verursachten Störsignale zunimmt und bei einer Verschmälerung der Richtcharakteristik, bei der insbesondere der horizontale und/oder der vertikale Öffnungswinkel abnimmt, die Anzahl der von Bodenreflektionen verursachten Störsignale abnimmt.

Erfindungsgemäß wird des Weiteren ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln. Das Computerprogramm kann auf einem maschinenlesbaren Speichermedium gespeichert werden, etwa auf einem permanenten oder wiederbeschreibbaren Speichermedium, oder in Zuordnung zu einer Computereinrichtung oder auf einer entfernbaren CD-ROM, DVD, Bluray-Disc oder einem USB-Stick. Zusätzlich oder alternativ kann das Computerprogramm auf einer Computereinrichtung wie etwa einem Server zum Herunterladen bereitgestellt werden, zum Beispiel bei einem Datennetzwerk wie das Internet oder eine Kommunikationsverbindung wie etwa eine Telefonleitung oder eine drahtlose Verbindung.

Erfindungsgemäß wird des Weiteren ein Fahrassistenzsystem zur Unterstützung eines Fahrers eines Fahrzeugs vorgeschlagen. Das Fahrassistenzsystem umfasst mindestens einen verdeckt eingebauten Ultraschallsensor und ein Steuergerät, wobei eine Membran des Ultraschallsensors mit einem Fahrzeugteil ein schwingfähiges System ausbildet. Das Steuergerät ist dazu eingerichtet, eines der hierin beschriebenen Verfahren auszuführen. Daher gelten die im Rahmen eines der Verfahren beschriebenen Merkmale entsprechend für das Fahrassistenzsystem und umgekehrt gelten im Rahmen des Fahrassistenzsystems beschriebene Merkmale entsprechend für die Verfahren.

Das Fahrassistenzsystem kann beispielsweise als ein Einparkassistent ausgestaltet sein, mit dem Parkplätze in der Umgebung des Fahrzeugs ermittelt werden und ggf. das Fahrzeug in eine der ermittelten Parklücken geführt wird. Weitere Ausgestaltungsmöglichkeiten sind beispielsweise ein Totwinkelassistent, der einen Fahrer des Fahrzeugs vor Objekten im toten Winkel warnt, oder ein Rückfahrassistent, der den Fahrer bei einer Rückwärtsfahrt des Fahrzeugs unterstützt.

Das Fahrassistenzsystem umfasst bevorzugt zusätzlich einen Temperatursensor zur Bestimmung der Temperatur des Fahrzeugteils, mit dem der mindestens eine Ultraschallsensor verbunden ist. Alternativ oder zusätzlich kann vorgesehen sein, das Fahrassistenzsystem mit einem Außenthermometer des Fahrzeugs zu verbinden, um eine Außentemperatur des Fahrzeugs zu ermitteln. Die mit dem Außenthermometer bzw. dem Sensor ermittelte Temperatur wird dann bevorzugt in Zusammenhang mit der Ausführung der Variante a) des Verfahrens verwendet.

### Vorteile der Erfindung

Durch das vorgeschlagene Verfahren zum Betrieb eines verdeckt eingebauten Ultraschallsensors wird ein bei Puls-Echo-Messungen verwendeter Schwellenwert zur Ausblendung von Störsignalen an die momentane Richtcharakteristik des Ultraschallsensors angepasst. Die Richtcharakteristik ist bei verdeckt eingebauten Ultraschallsensoren stark von den Umgebungsbedingungen abhängig, da die Richtcharakteristik neben den Eigenschaften des Ultraschallsensors auch von den Eigenschaften des Fahrzeugteils abhängig ist. Bei steigender Temperatur ändert sich die Richtcharakteristik dahingehend, dass ein horizontaler und ein vertikaler Öffnungswinkel, unter denen Signale durch den Ultraschallsensor abgestrahlt werden, vergrößert werden. Dadurch trifft das ausgesandte Ultraschallsignal bereits nach einem kürzeren Abstand vom Fahrzeug und mit höherer Intensität auf dem Boden auf, so dass vom Boden reflektierte Bodenechos ebenfalls mit höheren Signalstärken durch den Ultraschallsensor empfangen werden. Ohne die vorgeschlagene Berücksichtigung dieser Temperaturabhängigkeit der Richtcharakteristik müsste der Schwellenwert so gewählt werden, dass auch bei der größten erwarteten Temperatur des Fahrzeugteils Bodenechos zuverlässig ausgeblendet werden. Nachteilig hieran ist jedoch, dass dann im Gegenzug mit niedrigen Temperaturen, ein geringer Sichtbereich einhergeht. Die niedrigen Temperaturen führen zu einem kleinen horizontalen und/oder vertikalen Öffnungswinkel, unter denen vom Ultraschallsensor Signale abgestrahlt werden, wobei in Verbindung mit dem hohen Schwellenwert ein geringer Sichtbereich einhergeht. Durch die vorgeschlagene adaptive Einstellung des Schwellenwerts, kann dieser bei niedrigen Temperaturen abgesenkt werden, so dass auch Reflexionen von Objekten mit geringeren Signalstärken registriert werden. Der Sichtbereich des Sensors, also der Bereich, in dem dieser die Objekte in der Umgebung des Fahrzeugs erkennen kann, wird hierdurch vorteilhafterweise erweitert. Der Sichtbereich des Sensors hängt durch die an die Richtcharakteristik angepasste Wahl des Schwellenwerts nicht mehr von der Umgebungstemperatur ab, so dass insbesondere Objekte am Rand des Sichtbereichs des Ultraschallsensors unabhängig von der momentanen Umgebungstemperatur und damit unabhängig von der momentanen Richtcharakteristik des Sensors zuverlässig erkannt werden.

### Kurze Beschreibung der Zeichnungen

Ausführungsbeispiele der Erfindung sind in den Zeichnungen dargestellt und in der nachfolgenden Beschreibung näher erläutert. Es zeigen
- Figur 1: ein Fahrzeug mit einem verdeckt eingebauten Ultraschallsensor,
- Figur 2a: eine Simulation des horizontalen Öffnungswinkels,
- Figur 2b: eine Simulation des vertikalen Öffnungswinkels und
- Figur 3: ein Diagramm der Amplitude eines Bodenechosignals gegen den Abstand vom Ultraschallsensor.

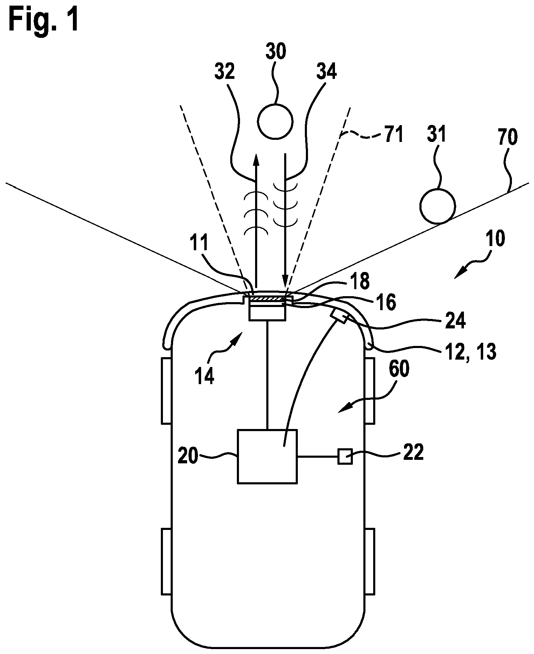

In Figur 1 ist schematisch ein Fahrzeug 10 mit einem erfindungsgemäßen Fahrassistenzsystem 60 dargestellt. Das Fahrassistenzsystem 60 umfasst einen Ultraschallsensor 14, einen Temperatursensor 24 sowie ein Steuergerät 20.

Das Fahrzeug 10 umfasst ein Fahrzeugteil 12, welches als Stoßfänger 13 ausgestaltet ist. Der Stoßfänger 13 weist einen Bereich 11 mit verringerter Wandstärke auf. In dem Bereich 11 mit verringerter Wandstärke ist auf der Innenseite der Außenwand des Stoßfängers 13 der Ultraschallsensor 14 angeordnet. Durch die Anordnung auf der Innenseite der Außenwand des Stoßfängers 13 ist der Ultraschallsensor 14 von außen nicht zu sehen, der Ultraschallsensor 14 ist somit verdeckt am Fahrzeug 10 eingebaut.

Der Ultraschallsensor 14 ist mit seiner Membran 16 über eine Klebeverbindung 18 in dem Bereich 11 mit verringerter Wandstärke mit der Außenwand des Stoßfängers 13 verbunden. Dadurch bilden die Membran 16 sowie der Stoßfänger 13 gemeinsam ein schwingfähiges System aus. Die Resonanzfrequenz dieses schwingfähigen Systems, die einen Öffnungswinkel 70, 71 beeinflusst, ist dabei insbesondere von den Materialeigenschaften des Fahrzeugteils 12 bzw. des Stoßfängers 13 abhängig. Bei Erhöhung der Temperatur verringert sich die Resonanzfrequenz, was eine Vergrößerung des Öffnungswinkels zur Folge hat und umgekehrt führt eine Verringerung der Temperatur zu einer Erhöhung der Resonanzfrequenz, was eine Verkleinerung des Öffnungswinkels zur Folge hat.

In der Figur 1 sind zwei verschiedene horizontale Öffnungswinkel 70, 71 skizziert. Dabei wird der größere Öffnungswinkel 70 bei hohen Temperaturen und der kleinere Öffnungswinkel 71 bei niedrigen Temperaturen erreicht.

Zum Erkennen von Objekten 30, 31 der Umgebung des Fahrzeugs 10 werden durch das Fahrassistenzsystem 60 mittels des Ultraschallsensors 14 Sendesignale 32 abgestrahlt und von Objekten 30, 31 reflektierte Echos 34 wieder empfangen. Um dabei Störsignale auszublenden, die durch Reflexionen des Sendesignals 32 durch den Boden auftreten, ist ein Schwellenwert vorgesehen. Nur Signale, deren Amplitude oberhalb des Schwellenwerts liegen, werden als Echo 34 eines Objekts 30, 31 interpretiert.

Ist die Umgebungstemperatur hoch, so weist der Ultraschallsensor 14 den größeren Öffnungswinkel 70 auf, so dass das Sendesignal 32 mit einer hohen Amplitude nicht nur auf das zentral gelegene Objekt 30, sondern auch auf das peripher gelegene weitere Objekt 31 trifft. Dementsprechend haben auch die von den Objekten 30 und 31 reflektierten Echos 34 ebenfalls eine hohe Amplitude, so dass diese über dem vorgegebenen Schwellenwert liegen.

Bei niedrigen Umgebungstemperaturen ändert sich die Richtcharakteristik des Ultraschallsensors 14, so dass dieser nun den kleinen Öffnungswinkel 71 aufweist. Innerhalb des durch den Abfall der Signalamplitude definierten kleinen Öffnungswinkels 71 befindet sich nun nur noch das zentral gelegene Objekt 30. Das peripher gelegene weitere Objekt 31 befindet sich außerhalb des kleinen Öffnungswinkels 71 und wird vom Sendesignal 32 nun nur noch mit stark verringerter Amplitude getroffen, so dass auch ein Echo 34 des weiteren Objekts 31 in seiner Amplitude stark verringert ist. Ohne eine Anpassung des Schwellenwerts liegt die Amplitude des Echos 34 des weiteren Objekts 31 nun unterhalb des Schwellenwerts, so dass dieses nicht mehr erkannt wird. Das weitere Objekt 31 würde ohne eine Anpassung des Schwellenwerts somit außerhalb des Sichtbereichs des Ultraschallsensors 14 liegen.

Aufgrund der Verringerung des Öffnungswinkels 70, 71 wird jedoch auch die Amplitude der als Störsignale empfangenen Bodenechos verringert, da auch ein in der Figur 1 nicht dargestellter vertikaler Öffnungswinkel entsprechend verkleinert ist und das Sendesignal 32 erst bei einer größeren Entfernung vom Fahrzeug 10 und mit einer verringerten Amplitude auf den Boden trifft. Erfindungsgemäß ist daher vorgesehen, abhängig von der momentanen Richtcharakteristik des Sensors den Schwellenwert anzupassen und entsprechend der mit Bezug zu Figur 1 beschriebenen Situation abzusenken. Durch das Absenken des Schwellenwerts können auch die Echos 34 des weiteren Objekts 31 trotz ihrer verringerten Amplitude weiter erfasst werden, so dass der Sichtbereich des Ultraschallsensors 14 bei verringerten Temperaturen gegenüber einem Betrieb ohne Anpassung des Schwellenwerts vergrößert wird.

Für die Anpassung des Schwellenwerts ist in der in Figur 1 dargestellten Ausführungsform vorgesehen, einen Temperatursensor 24 an dem Stoßfänger 13 anzuordnen. Hierdurch ist das Steuergerät 20 in der Lage, die genaue Temperatur des Fahrzeugteils 12 zu bestimmen. Nach dem Bestimmen der Temperatur kann dann beispielsweise aus einem Speicher des Steuergeräts 20 ein für die gemessene Temperatur angepasster Schwellenwert abgerufen werden. In alternativen Ausführungsformen kann auf den Temperatursensor 24 verzichtet werden und auf ein Thermometer 22 des Fahrzeugs 10 zurückgegriffen werden. Hierdurch kann die Außentemperatur gemessen werden und für eine Abschätzung der Temperatur des Fahrzeugteils 12 verwendet werden.

In einer weiteren Ausführungsform des Verfahrens wird anstelle der Messung einer Temperatur die aufgrund einer Veränderung der Materialeigenschaften des Stoßfängers 13 geänderte Resonanzfrequenz des Schallwandlers des Ultraschallsensors 14 gemessen. Dies kann beispielsweise über eine Impedanzmessung erfolgen.

In einer weiteren alternativen Ausführungsform werden für eine Regelung des Schwellenwerts durch den Ultraschallsensor 14 empfangene Signale ausgewertet. Dabei wird der Schwellenwert erhöht, sofern eine Falschalarmrate unterhalb eines vorgegebenen Wertes liegt und der Schwellenwert wird abgesenkt, sofern die Falschalarmrate über dem vorgegebenen Wert liegt.

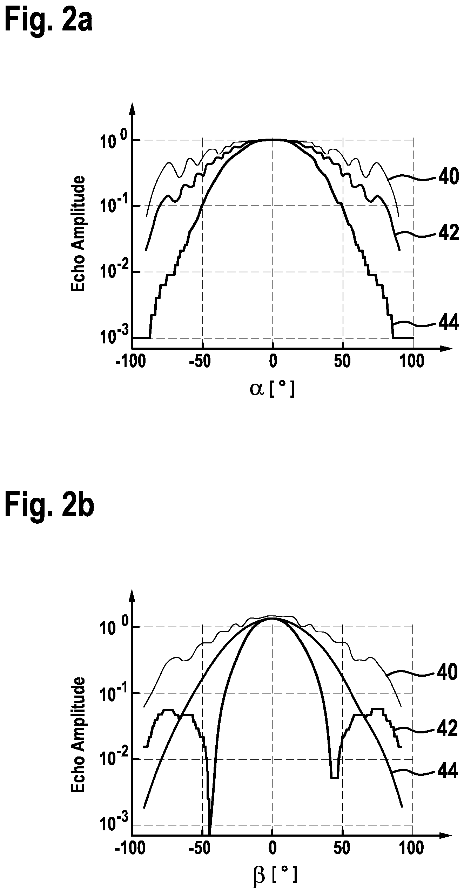

In Figur 2a ist eine Simulation der Amplitude eines Echosignals in Abhängigkeit des horizontalen Winkels α für drei verschiedene Resonanzfrequenzen aufgetragen. Das aufgetragene Echosignal ist normiert und kann beispielsweise von einem Hindernis oder vom Boden stammen. Die erste Kurve 40 zeigt dabei den Verlauf der Echoamplitude für eine Resonanzfrequenz von 40 kHz, die zweite Kurve 42 zeigt die Echoamplitude für eine Resonanzfrequenz von 48 kHz und die dritte Kurve 44 zeigt die Echoamplitude für eine Resonanzfrequenz von 60 kHz.

In Figur 2b ist entsprechend für die drei verschiedenen Resonanzfrequenzen 40 kHz, 48 kHz und 60 kHz der vertikale Öffnungswinkel β aufgetragen.

Wie den Figuren 2a und 2b entnommen werden kann, verringert sich der horizontale Öffnungswinkel α bzw. der vertikale Öffnungswinkel β bei Erhöhung der Resonanzfrequenz. Hierdurch trifft das Sendesignal erst bei einer größeren Entfernung vom Ultraschallsensor auf den Boden, so dass auch die Amplitude des entsprechenden Echosignals abnimmt.

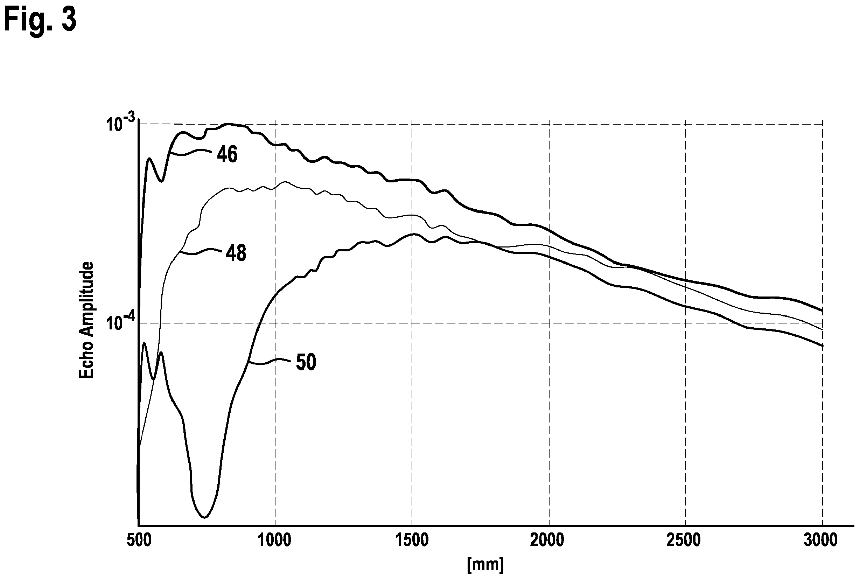

In Figur 3 ist das Empfangssignal von Puls-Echo-Messungen für drei verschiedene Resonanzfrequenzen aufgetragen, wobei auf der Y-Achse die ermittelte Echoamplitude und auf der X-Achse die aus der Laufzeit des Signals berechnete Entfernung in mm angegeben ist. Bei der Puls-Echo-Messung wird ein zeitlich begrenztes Sendesignal über den Ultraschallsensor 14 ausgesendet und es werden anschließend Echos empfangen. Je mehr Zeit seit dem Aussenden vergeht, desto größer ist die Entfernung des reflektierenden Objekts. Die Figur 3 zeigt in einer ersten Kurve 46 das Empfangssignal für eine Resonanzfrequenz von 42 kHz, eine zweite Messkurve 48 zeigt das Empfangssignal für eine Resonanzfrequenz von 48 kHz und eine dritte Messkurve 50 zeigt das Empfangssignal für eine Resonanzfrequenz von 57 kHz.

Der Darstellung der Figur 3 kann entnommen werden, dass erwartungsgemäß für die dritte Messkurve 50, die der höchsten verwendeten Frequenz entspricht, der Öffnungswinkel am kleinsten ist und somit bei geringen Entfernungen die geringsten Echoamplituden für die Bodenechos liefert. Bei größeren Entfernungen ab etwa 175 cm weist die dritte Messkurve 50 eine gegenüber der zweiten Messkurve 48 vergrößerte Amplitude auf und ab etwa 225 cm weist die dritte Messkurve 50 die größte Echoamplitude auf. Dies kann über die aufgrund des geringsten Öffnungswinkels verbesserte Richtwirkung erklärt werden

Aus Figur 3 ist ersichtlich, dass unter Ausnutzung der Kenntnis der von den Umgebungsbedingungen abhängigen Resonanzfrequenz und damit unter Ausnutzung der von den Umgebungsbedingungen abhängigen Richtcharakteristik ein Schwellenwert zum Ausblenden von Bodenechos stark abgesenkt werden kann. Hierbei ist es insbesondere vorteilhaft, den von der Richtcharakteristik abhängigen Schwellenwert mit einer Abhängigkeit von der Entfernung zu kombinieren, um für jede Entfernung und für jede Richtcharakteristik stets den optimalen Schwellenwert vorgeben zu können.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Betrieb eines Ultraschallsensors (14) eines Fahrzeugs (10), wobei der Ultraschallsensor (14) verdeckt eingebaut ist, so dass eine Membran (16) des Ultraschallsensors (14) mit einem Fahrzeugteil (12) verbunden ist, wobei die momentanen Eigenschaften des Fahrzeugteils (12) eine Richtcharakteristik des Ultraschallsensors (14) beeinflussen und wobei bei Puls-Echo-Messungen unter Verwendung des Ultraschallsensors (14) ein Schwellenwert zum Ausblenden von Störsignalen verwendet wird, **dadurch gekennzeichnet, dass** eine Anpassung des Schwellenwertes an die durch die momentanen Eigenschaften des Fahrzeugteils (12) vorgegebene Richtcharakteristik des Ultraschallsensors (14) erfolgt durch:
a) Ermitteln einer Temperatur und Bestimmen des Schwellenwerts unter Verwendung einer vorab ermittelten Beziehung zwischen Temperatur und Richtcharakteristik, oder
b) Bestimmen einer Resonanzfrequenz eines aus der Membran (16) und dem Fahrzeugteil (12) gebildeten schwingfähigen Systems und Bestimmen des Schwellenwerts unter Verwendung einer vorab ermittelten Beziehung zwischen Resonanzfrequenz und Richtcharakteristik.

2. Verfahren nach Anspruch 1, **dadurch gekennzeichnet, dass** die Temperatur der Variante a) eine über ein Thermometer (22) des Fahrzeugs (10) ermittelte Außentemperatur ist oder dass die Temperatur eine über einen am Fahrzeugteil (12) oder am Ultraschallsensor (14) angeordneten Temperatursensor (24) ermittelte Temperatur des Fahrzeugteils (12) ist.

3. Verfahren nach Anspruch 1 oder 2, **dadurch gekennzeichnet, dass** die Beziehung zwischen der Temperatur und der Richtcharakteristik und/oder die Beziehung zwischen der Resonanzfrequenz und der Richtcharakteristik durch Messungen vorab ermittelt werden.

4. Verfahren nach einem der Ansprüche 1 bis 3, **dadurch gekennzeichnet, dass** in der Variante b) die Resonanzfrequenz des schwingfähigen Systems über eine Messung der Impedanz des Ultraschallsensors (14) erfolgt.

5. Verfahren nach einem der Ansprüche 1 bis 4, **dadurch gekennzeichnet, dass** mittels einer Wertetabelle bei Variante a) einer ermittelten Temperatur ein entsprechender Schwellenwert zugeordnet wird oder mittels einer Wertetabelle bei Variante b) einer ermittelten Resonanzfrequenz ein entsprechender Schwellenwert zugeordnet wird.

6. Verfahren nach einem der Ansprüche 1 bis 5, **dadurch gekennzeichnet, dass** die Störsignale Signale von Bodenreflexionen beinhalten, wobei bei einer Verbreiterung der Richtcharakteristik die Anzahl der von Bodenreflexionen verursachten Störsignale zunimmt und bei einer Verschmälerung der Richtcharakteristik die Anzahl der von Bodenreflexionen verursachten Störsignale abnimmt.

7. Verfahren zum Betrieb eines Ultraschallsensors (14) eines Fahrzeugs (10), wobei der Ultraschallsensor (14) verdeckt eingebaut ist, so dass eine Membran (16) des Ultraschallsensors (14) mit einem Fahrzeugteil (12) verbunden ist, wobei die momentanen Eigenschaften des Fahrzeugteils (12) eine Richtcharakteristik des Ultraschallsensors (14) beeinflussen und wobei bei Puls-Echo-Messungen unter Verwendung des Ultraschallsensors (14) ein Schwellenwert zum Ausblenden von Störsignalen verwendet wird, **dadurch gekennzeichnet, dass** der Schwellenwert unter Verwendung von bei den Puls-Echo-Messungen empfangenen Störsignalen geregelt wird, **dadurch gekennzeichnet, dass** der Schwellenwert so geregelt wird, dass eine konstante vorgegebene Falschalarmrate eingehalten wird, wobei ein Falschalarm ein Störsignal ist, welches eine Amplitude aufweist, die über dem Schwellenwert liegt und somit fälschlicherweise als ein Echosignal eines Objekts angesehen wird, wobei der Schwellenwert so geregelt wird, dass wenn die Falschalarmrate ansteigt, der Schwellenwert angehoben wird und der Schwellenwert abgesenkt wird, wenn die Falschalarmrate sinkt.

8. Computerprogramm, das das Verfahren nach einem der Ansprüche 1 bis 7 ausführt, wenn es auf einem Computer abläuft.

9. Fahrassistenzsystem (60) zur Unterstützung eines Fahrers eines Fahrzeugs (10) umfassend mindestens einen verdeckt eingebauten Ultraschallsensor (14) und ein Steuergerät (20), wobei eine Membran (16) des Ultraschallsensors (14) mit einem Fahrzeugteil (12) ein schwingfähiges System ausbildet, **dadurch gekennzeichnet, dass** das Steuergerät (20) eingerichtet ist, eines der Verfahren nach einem der Ansprüche 1 bis 7 auszuführen.

## Claims

1. Method for operating an ultrasonic sensor (14) of a vehicle (10), wherein the ultrasonic sensor (14) is installed in a concealed manner such that a membrane (16) of the ultrasonic sensor (14) is connected to a vehicle part (12), wherein the instantaneous properties of the vehicle part (12) influence a directional characteristic of the ultrasonic sensor (14), and wherein a threshold value for hiding interference signals is used in pulse echo measurements using the ultrasonic sensor (14), **characterized in that** the threshold value is adapted to the directional characteristic of the ultrasonic sensor (14) that is predefined by the instantaneous properties of the vehicle part (12) by:
a) determining a temperature and determining the threshold value using a previously determined relationship between the temperature and the directional characteristic, or
b) determining a resonant frequency of an oscillatory system formed from the membrane (16) and the vehicle part (12), and determining the threshold value using a previously determined relationship between the resonant frequency and the directional characteristic.

2. Method according to Claim 1, **characterized in that** the temperature in variant a) is an outside temperature determined using a thermometer (22) of the vehicle (10), or **in that** the temperature is a temperature of the vehicle part (12) that is determined using a temperature sensor (24) arranged on the vehicle part (12) or on the ultrasonic sensor (14) .

3. Method according to Claim 1 or 2, **characterized in that** the relationship between the temperature and the directional characteristic and/or the relationship between the resonant frequency and the directional characteristic is/are determined in advance by means of measurements.

4. Method according to one of Claims 1 to 3, **characterized in that**, in variant b), the resonant frequency of the oscillatory system is effected by measuring the impedance of the ultrasonic sensor (14) .

5. Method according to one of Claims 1 to 4, **characterized in that** a table of values is used in variant a) to assign a corresponding threshold value to a determined temperature, or a table of values is used in variant b) to assign a corresponding threshold value to a determined resonant frequency.

6. Method according to one of Claims 1 to 5, **characterized in that** the interference signals comprise signals from ground reflections, wherein the number of interference signals caused by ground reflections increases if the directional characteristic widens and the number of interference signals caused by ground reflections decreases if the directional characteristic narrows.

7. Method for operating an ultrasonic sensor (14) of a vehicle (10), wherein the ultrasonic sensor (14) is installed in a concealed manner such that a membrane (16) of the ultrasonic sensor (14) is connected to a vehicle part (12), wherein the instantaneous properties of the vehicle part (12) influence a directional characteristic of the ultrasonic sensor (14), and wherein a threshold value for hiding interference signals is used in pulse echo measurements using the ultrasonic sensor (14), **characterized in that** the threshold value is controlled using interference signals received in the pulse echo measurements, **characterized in that** the threshold value is controlled in such a manner that a constant predefined false alarm rate is complied with, wherein a false alarm is an interference signal which has an amplitude above the threshold value and is therefore incorrectly considered to be an echo signal of an object, wherein the threshold value is controlled in such a manner that the threshold value is increased if the false alarm rate rises and the threshold value is reduced if the false alarm rate falls.

8. Computer program which carries out the method according to one of Claims 1 to 7 when it runs on a computer.

9. Driver assistance system (60) for assisting a driver of a vehicle (10), comprising at least one ultrasonic sensor (14) installed in a concealed manner and a control device (20), wherein a membrane (16) of the ultrasonic sensor (14) forms an oscillatory system with a vehicle part (12), **characterized in that** the control device (20) is configured to carry out one of the methods according to one of Claims 1 to 7.

## Revendications

1. Procédé de fonctionnement d'un capteur à ultrasons (14) d'un véhicule (10), le capteur à ultrasons (14) étant installé en étant recouvert de sorte qu'une membrane (16) du capteur à ultrasons (14) soit reliée à une partie de véhicule (12), les propriétés instantanées de la partie de véhicule (12) influant sur une caractéristique directionnelle du capteur à ultrasons (14) et une valeur seuil étant utilisée lors de mesures d'échos d'impulsions à l'aide du capteur à ultrasons (14) pour masquer des signaux parasites, **caractérisé en ce que** la valeur seuil est adaptée à la caractéristique directionnelle du capteur à ultrasons (14), qui est spécifiée par les propriétés instantanées de la partie de véhicule (12), par :
a) détection d'une température et détermination de la valeur seuil à l'aide d'une relation préalablement déterminée entre la température et la caractéristique directionnelle, ou
b) détermination d'une fréquence de résonance d'un système oscillant formé de la membrane (16) et de la partie de véhicule (12) et détermination de la valeur seuil à l'aide d'une relation préalablement déterminée entre la fréquence de résonance et la caractéristique directionnelle.

2. Procédé selon la revendication 1, **caractérisé en ce que** la température de la variante a) est une température extérieure déterminée par un thermomètre (22) du véhicule (10) ou **en ce que** la température est une température de la partie de véhicule (12) qui est déterminée par un capteur de température (24) disposé au niveau de la partie de véhicule (12) ou du capteur à ultrasons (14).

3. Procédé selon la revendication 1 ou 2, **caractérisé en ce que** la relation entre la température et la caractéristique directionnelle et/ou la relation entre la fréquence de résonance et la caractéristique directionnelle sont déterminées au préalable par des mesures.

4. Procédé selon l'une des revendications 1 à 3, **caractérisé en ce que**, dans la variante b), la fréquence de résonance du système oscillant est effectuée par une mesure de l'impédance du capteur à ultrasons (14).

5. Procédé selon l'une des revendications 1 à 4, **caractérisé en ce qu'**une valeur seuil correspondante est associée à une température déterminée au moyen d'un tableau de valeurs dans la variante a) ou une valeur seuil correspondante est associée à une fréquence de résonance déterminée au moyen d'un tableau de valeurs dans la variante b).

6. Procédé selon l'une des revendications 1 à 5, **caractérisé en ce que** les signaux parasites contiennent des signaux issus de réflexions au sol, le nombre de signaux parasites générés par des réflexions au sol augmentant lors d'un élargissement de la caractéristique directionnelle et le nombre de signaux parasitées générés par des réflexions au sol diminuant lors d'un rétrécissement de la caractéristique directionnelle.

7. Procédé de fonctionnement d'un capteur à ultrasons (14) d'un véhicule (10), le capteur à ultrasons (14) étant installé en étant recouvert de sorte qu'une membrane (16) du capteur à ultrasons (14) soit reliée à une partie de véhicule (12), les propriétés instantanées de la partie de véhicule (12) influant sur une caractéristique directionnelle du capteur à ultrasons (14) et une valeur seuil étant utilisée lors de mesures d'échos d'impulsions à l'aide du capteur à ultrasons (14) pour masquer des signaux parasites, **caractérisé en ce que** la valeur seuil est régulée à l'aide de signaux parasites reçus lors de mesures d'échos d'impulsions, **caractérisé en ce que** la valeur seuil est régulée de façon à maintenir un taux de fausses alarmes prédéterminé constant, une fausse alarme étant un signal parasite qui a une amplitude qui est supérieure à la valeur seuil et qui est donc considérée à tort comme un signal d'écho d'un objet, la valeur seuil étant régulée de façon à augmenter la valeur seuil, lorsque le taux de fausses alarmes augmente et à abaisser la valeur seuil lorsque le taux de fausses alarmes diminue.

8. Logiciel mettant en œuvre le procédé selon l'une des revendications 1 à 7 lorsqu'il est exécuté sur un ordinateur.

9. Système d'assistance à la conduite (60) destiné à assister un conducteur d'un véhicule (10) comprenant au moins un capteur à ultrasons recouvert (14) et une unité de commande (20), une membrane (16) du capteur à ultrasons (14) formant un système oscillant avec une partie de véhicule (12), **caractérisé en ce que** l'unité de commande (20) est conçue pour mettre en œuvre l'un des procédés selon l'une des revendications 1 à 7.
